# EUROPEAN PATENT APPLICATION

(11) **EP 0 865 739 A1**
(43) Date of publication of application: **23.09.1998**
(21) Application number: 97301859.1
(22) Date of filing: 19.03.1997
(51) Int. Cl.: A23P 1/08, A23L 1/315

(54) **Coated food product and process for the preparation thereof**

(71) Applicant: UNILEVER PLC, London EC4P 4BQ (GB)
(72) Inventor: De Bruijne, Dirk Willem c/o Unilever Res. Vlaard., 3133 AT Vlaardingen (NL); Van der Kooij, Gijsbert c/o Unilever Res. Vlaard., 3133 AT Vlaardingen (NL); Vermeer-Mols, Linda Johanna Maria, 3133 AT Vlaardingen (NL); Sarwin, Ridwan c/o Unilever Research Vlaardingen, 3133 AT Vlaardingen (NL)
(74) Representative: Mulder, Cornelis Willem Reinier, Dr.

(57) **Abstract**

A process for the manufacture of a particulate-coated food product comprises the steps of; (a) applying batter to a frozen food inner core; (b) setting the batter; (c) freezing the food core; (d) enrobing the frozen food core with an adhesion agent, which has a temperature of from 0 to 20°C, a viscosity of from 0.1 to 6 Pas at 20°C, a setting temperature of from 40°C to 90°C and a water binding capacity of from 0.3 to 5g water per gram dry matter; (e) coating the enrobed food core with a particulate coating; and (f) freezing the food product; wherein, in between steps (e) and (f), the adhesion agent is set using a heating method which is not frying.

## Description

### Technical Field of the Invention

The invention relates to a particulate-coated food product suitable for heating for consumption in a microwave oven and a process for the preparation thereof.

### Background to the Invention

It is desirable to be able to provide particulate-coated food products which, after heating for consumption in a microwave oven, have crisp, crunchy coatings.

Traditionally, such particulate-coated food products have been heated for consumption by, for example, deep or shallow fat frying, oven baking or grilling. Using such preparation methods, the product provided has the required crisp, crunchy coating. However, when conventional coated products are heated for consumption in a microwave oven the product provided has a particulate coating that is soggy, tough and leathery. This is because the temperature reached at the outer part of the product during microwave heating is not sufficient to generate the crispness required.

Conventional coated food products are manufactured according to the following steps:
- portioning the food product to be coated
- applying batter
- applying a particulate coating, typically breadcrumbs
- frying the coated food product in oil
- freezing
- packaging and storing.

The consumer subsequently heats the products for consumption.

We have observed that, during manufacture, the step of frying the coated product in oil in order to set the batter and adhere the breadcrumbs to the batter results in the relatively dry breadcrumbs (moisture content of approximately 5%) being trapped in the batter which has a high moisture content (approximately 60%), leading to a migration of water from the batter into the dry breadcrumb on frozen storage. On conventional heating for consumption (eg. oven baking, grilling, shallow fat frying), the excess moisture in the breadcrumb will be lost, however this is not possible with microwave heating.

WO 96/26652 relates to a process for the manufacture of a food product comprising; (i) applying batter to a frozen food inner core to form a food core; (ii) setting the batter; (iii) freezing the food core; (a) enrobing the frozen food core with an adhesion agent, the adhesion agent having a temperature of from 0 to 20°C, a viscosity of from 0.1 to 6 Pas at 20°C, a setting point of from 40°C and 90°C and a water binding capacity of from 0.3 to 5g water per gram dry matter; (b) coating the enrobed food core with a particulate coating; and (c) freezing the food product. In this process, it is essential that the adhesion agent is not set until at least the initial stages of the heating process for consumption.

The present invention seeks to provide an improved microwaveable particulate-coated food product.

### Description of the Invention

According to the present invention there is provided a process for the manufacture of a particulate-coated food product, the process comprising the steps of:
(a) applying batter to a frozen food inner core to form a food core;
(b) setting the batter;
(c) freezing the food core;
(d) enrobing the frozen food core with an adhesion agent, which has a temperature of from 0 to 20°C, a viscosity of from 0.1 to 6.0 Pas at 20°C, a setting temperature of from 40°C to 90°C and a water binding capacity of from 0.3 to 5 g water per gram dry matter;
(e) coating the enrobed food core with a particulate coating; and
(f) freezing the food product;
characterised in that, in between steps (e) and (f), the adhesion agent is set using a heating method which is not frying.

In contrast to WO 96/26652, which states that it is essential that an adhesion agent is not set until a food product is heated for consumption, it is essential in the present invention that the adhesion agent is set during the manufacturing process of the coated food product; the heat setting results in a food product having superior crispness when heated in a microwave oven.

The heat setting is important because the particulate coating is normally porous and it is important that the pores of the coating are not substantially blocked: if the pores do become substantially blocked, drying the coated product in a microwave oven is not sufficient to achieve crispness of the coating.

When the enrobed food core is coated with the particulate coating, the adhesion agent penetrates the pores of the coating to stick the coating to the food core. Subsequent heat setting of the adhesion agent raises its viscosity and prevents its further penetration into the pores. Consequently, the pores of the crumbs are not blocked and the crumbs are sufficiently dried, even when the product is heated in a microwave oven, to achieve good crispness.

Frying the coated product in fat prior to freezing may cause fat to block the pores; hence, frying is specifically excluded as a heating method for setting the adhesion agent.

The time taken between coating the enrobed food core with a particulate coating and heat-setting the adhesion agent is preferably less than 6 minutes, more preferably less than 3 minutes. The less viscous the adhesion agent, the more important it is that the time taken is short, since the shorter the time, the less opportunity there is for the adhesion agent to penetrate and block the pores of the coating prior to being heat-set.

In addition to providing a crisper coating, the step of heat-setting the adhesion agent is advantageous because it provides a coating layer of adhesion agent that is solid and thus will not drip from the food product under non-optimum storage conditions; also, the heat step may be used to pasteurise or sterilize the food product; the heat step also provides a means for manipulating the taste and/or colour of the external layers of the food product.

Preferably the heat setting step comprises a rapid heating method. Examples of suitable rapid heating methods are the application of high intensity near infrared as disclosed in WO 94/10857, the use of targeted dielectric heat as disclosed in EP 0650670, the application of steam as disclosed in GB 1 508 781 and the application of conventional heating methods such as conventional oven baking, infra red radiation and air impingement.

It should be noted that the adhesive agent is not acting as a moisture barrier, ie. it does not necessarily prevent diffusion of water into the crumb coating on frozen storage.

The food inner core may comprise, for example, meat, such as poultry, lamb, beef, pork, veal; fish; vegetables and mixtures thereof. The food inner core may also comprise a sauce.

The food core is frozen, preferably to from -20 to -30°C, before being enrobed in the adhesive agent.

### The Batter

The batter may be a dry batter mix or a batter mix suspension in water. The batter may comprise flour, starch including modified starch, carrageenan, xanthan, maltodextrins, pectins, alginates, guar gum, agar, gum arabic, locust bean gum, carboxymethylcellulose, hydroxypropyl methyl cellulose, methyl cellulose and mixtures thereof.

The batter is set by any suitable means, for example, deep-frying in oil, blast freezing, the application of High Intensity Near Infra Red as disclosed in WO94/10857, the use of targeted dielectric heat as disclosed in EP 0650670, the application of steam as disclosed in GB 1 508 781 and the application of conventional heating methods such as conventional oven baking, infra red radiation and air impingement.

### The Adhesion Agent

The viscosity of the adhesion agent is important in achieving crumb crispness; prior to heat setting, its viscosity should not be so low that it penetrates and blocks the pores; instead, its viscosity should be such that it penetrates the pores only a little in order to stick the coating onto the food core.

Preferably, the adhesion agent has a viscosity of from 0.3 Pas to 5 Pas at 20°C.

Viscosity may be measured by rotation in a conventional rheometer at a shear rate of 10s⁻¹ at a temperature of 20°C.

The setting temperature of the adhesion agent is the temperature at which it becomes solid. This may be determined by means of a rheometer equipped with a programmable thermostat using a concentric cylinder geometry.

For example, the setting temperature of a sample having an initial temperature of about 20°C is measured by heating it at a slow rate up to 100°C in order to obtain a trace of storage modulus as a function of temperature. This trace shows a step at the setting temperature. This point is measured by approximating both the low and the high temperature ends of the trace as straight lines and taking the setting temperature as the point of intersection of the bisectrix of the lines and the curve of the trace.

A preferred setting temperature of the adhesion agent is from 65 to 85 °C. A preferred water binding capacity is from 0.5 to 3g water per gram of dry matter.

Water binding capacity is defined as the amount of water bound by the adhesion agent and may be determined using the centrifugal method described by J.R. Quinn and D. Paton in Cereal Chemistry 56, 1, 38-39 (1979). For example, the sample temperature is 20°C, the centrifugal acceleration is 6000 g (ie 60000 m/s²) and the time of centrifugation is 10 min.

The adhesion agent will typically be a composition comprising a hydrocolloid and/or a soluble protein. The adhesion agent may also optionally comprise fat, for example, vegetable oil.

Suitable hydrocolloids include starch, including modified starch, carrageenan, xanthan, maltodextrins, pectins, alginates, guar gum, agar, gum arabic, locust bean gum, carboxymethylcellulose, hydroxypropyl methyl cellulose, methyl cellulose and mixtures thereof.

Suitable soluble proteins include albumins, globulins, gliadins, glutenins, gelatin, muscle proteins and mixtures thereof. Preferably the soluble protein is selected from albumins, globulins and mixtures thereof.

Suitable adhesion agents are, for example, egg yolk, a composition containing:
1% w/w methylcellulose
39% w/w waxy maize starch
10% w/w coconut fat
50% w/w water
or a composition containing:
16.9% w/w egg white powder
3.5% w/w Admul lec 5377 (an emulsifier from Quest International)
25.9% w/w bean oil
0.1% w/w Tween 60 (an emulsifier from Quest International)
0.1% w/w guar gum
0.5% w/w annatto
53% w/w water

### The particulate coating

By particulate coating is meant any particulate coating material including breadcrumbs and other crumb coatings, vegetable pieces, seeds and mixtures thereof. Preferably a porous particulate coating is used, for example the commercially available Pandora Japanese crumbs, rice flakes and potato fresco crumbs.

Advantageously the crumb may be of the type disclosed in WO94/22330, WO94/18857, EP 319 287, EP 530 014, EP 235 308, EP 333 886 and EP 565 386.

Examples of the products and processes of the invention will now be described to illustrate, but not to limit, the invention.

### EXAMPLES

### Example 1

Frozen minced chicken meat was shaped into a small oval portion (12 g) and enrobed in a batter having the following composition:
21% w/w Green flour (Green flour Millers, UK)
10% w/w Trident flour (Bowmans, UK)
10% w/w raw potato starch
2% w/w salt
57% w/w water

The enrobed chicken was quickly frozen at -30°C for 15 min. The sample was then dipped into an adhesion agent having the following composition:
- 16.9 % w/w egg white powder
- 3.5 % w/w Admul lec 5377 (Quest International)
- 25.9 % w/w bean oil
- 0.1 % w/w Tween 60 (Quest International)
- 0.1 % w/w guar gum
- 0.5 % w/w annatto
- 53 % w/w water
that was prepared in a homogenizer at a pressure of 125 bar.

The dipped sample was covered with traditional breadcrumbs and heat-set in an air impingement oven (continuous band oven for pizza) at 260°C for 6 min before freezing at -14°C for storage for 8 weeks.

After cooking the frozen sample in a conventional microwave oven (650 Watts, Panasonic model 5485 H) for 3.5 min and allowing it to stand for 3 min at room temperature, the product was assessed by a trained sensory panel. The panel assessed the crispness of the product on a scale of 1 to 10, where 1 is not crispy and 10 is very crispy. The panel concluded that the product had an excellent quality; the breadcrumbs were judged with a crispness score of 7 after 8 weeks of storage at -14°C.

### Example 2

A frozen minced chicken meat portion was coated as described in Example 1, but heat set in a muffle-furnace at 500°C for 20 sec before freezing at -14°C for storage for 8 weeks.

After cooking the frozen sample as described in Example 1, the product was assessed by a trained sensory panel, who concluded that the product had an excellent quality; the breadcrumbs were judged with a crispness score of 7 after 8 weeks of storage at -14°C .

### Comparative Example A

A frozen minced chicken meat portion was coated as described in Example 1, but was not heat set. Instead, the sample was frozen directly at -30°C for 30 min and stored at -14°C for 8 weeks.

After cooking the frozen sample in a microwave oven as described in Example 1, the product was assessed by a trained sensory panel. The breadcrumbs were judged with a crispness score of 5 after 8 weeks of storage at -14°C.

These experiments illustrate that the heat setting of the adhesion agent provides a product with a particulate coating that has a superior crispness after heating in a microwave oven for consumption.

## Claims

1. A process for the manufacture of a particulate-coated food product, the process comprising the steps of;
(a) applying batter to a frozen food inner core;
(b) setting the batter;
(c) freezing the food core;
(d) enrobing the frozen food core with an adhesion agent, which has a temperature of from 0 to 20°C, a viscosity of from 0.1 to 6 Pas at 20°C, a setting temperature of from 40°C to 90°C and a water binding capacity of from 0.3 to 5 g water per gram dry matter;
(e) coating the enrobed food core with a particulate coating; and
(f) freezing the food product;
characterised in that, in between steps (e) and (f), the adhesion agent is set using a heating method which is not frying.

2. A process according to claim 1 wherein the heating method used to set the adhesion agent is selected from the group consisting of targeted dielectric heating, steam heating, high intensity near-infra red heating, conventional oven baking, infra red radiation heating and mixtures thereof.

3. A process according to claim 1 or claim 2 wherein the time taken between coating the enrobed food core with a particulate coating and heat-setting the adhesion agent is less than 6 minutes.

4. A process according to any preceding claim wherein the adhesion agent has a viscosity of from 0.3 to 5 Pas at 20°C.

5. A process according to any preceding claim wherein the adhesion agent has a setting temperature of from 65 to 85°C.

6. A process according to any preceding claim wherein the adhesion agent has a water binding capacity of from 0.5 to 3 g water per gram of dry matter.

7. A process according to any preceding claim wherein the adhesion agent comprises a hydrocolloid and/or a soluble protein.

8. A process according to claim 7 wherein the hydrocolloid is selected from the group consisting of starch, including modified starch, carrageenan, xanthan, maltodextrins, pectins, alginates, guar gum, agar, gum arabic, locust bean gum, carboxymethyl cellulose, hydroxypropyl methyl cellulose, methyl cellulose and mixtures thereof.

9. A process according to claim 7 wherein the soluble protein is selected from the group consisting of albumins, globulins, gliadins, glutenins, gelatin, muscle proteins and mixtures thereof.

10. A food product obtained by the process claimed in any preceding claim.
